(19) Europäisches Patentamt / European Patent Office / Office européen des brevets

(11) **EP 3 944 911 A1**

(12) **EUROPÄISCHE PATENTANMELDUNG**

(43) Veröffentlichungstag:
02.02.2022  Patentblatt 2022/05

(21) Anmeldenummer: 20188405.3

(22) Anmeldetag: **29.07.2020**

(51) Internationale Patentklassifikation (IPC):
**B22F 3/105** (2006.01)        **B33Y 10/00** (2015.01)
**B33Y 30/00** (2015.01)        **B22F 3/00** (2021.01)
**B29C 64/245** (2017.01)        **B29C 64/379** (2017.01)
**B29C 64/40** (2017.01)        **B29C 64/118** (2017.01)
**B29C 64/153** (2017.01)

(52) Gemeinsame Patentklassifikation (CPC):
(C-Sets verfügbar)
**B33Y 10/00; B22F 10/40; B22F 12/30;**
**B29C 64/245; B29C 64/40; B33Y 30/00;**
B22F 2998/00        (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Ceriani, Nicola Maria**
**91056 Erlangen (DE)**

(54) **SYSTEM MIT EINER 3D-DRUCKVORRICHTUNG UND VERFAHREN ZUM BETRIEB EINES SOLCHEN SYSTEMS**

(57)  Angegeben werden ein System, welches zumindest eine 3D-Druckvorrichtung (12) und zumindest ein zusammen mit der 3D-Druckvorrichtung (12) verwendbares Tragschild (22) umfasst, wobei die 3D-Druckvorrichtung (12) eine Grundplatte (16) umfasst oder der 3D-Druckvorrichtung (12) eine Grundplatte (16) zugeordnet ist, wobei das zumindest eine Tragschild (22) im Bereich der 3D-Druckvorrichtung (12) unabhängig von dessen Grundplatte (16) separat platzierbar ist und wobei eine Oberfläche der Grundplatte (16) und eine Oberfläche des zumindest einen Tragschilds (22) als Basis für einen 3D-Druck fungieren sowie ein Verfahren zum Betrieb eines solchen Systems.

FIG 2

(52) Gemeinsame Patentklassifikation (CPC): (Forts.)

C-Sets
B22F 2998/00, B22F 10/18, B22F 10/22,
B22F 10/25, B22F 10/28

**Beschreibung**

Die Erfindung betrifft das Gebiet des sogenannten 3D-Drucks. In der Fachliteratur sind die Begriffe additive Fertigung und dessen englische Entsprechung "additive manufacturing" (AM) geläufig. Die Begriffe bezeichnen dasselbe. In der hier vorgelegten Beschreibung werden vornehmlich Begriffe wie 3D-Druck, 3D-Druckverfahren und dergleichen verwendet. Die Begriffe 3D-Druck, additive Fertigung, additive manufacturing und dergleichen sind Synonyme und werden hier synonym benutzt.

Konkret betrifft die Erfindung eine 3D-Druckvorrichtung (eine AM-Vorrichtung), ein System mit einer 3D-Druckvorrichtung (ein AM-System) und ein Verfahren zum Betrieb eines solchen Systems (ein Verfahren zum 3D-Druck, ein AM-Verfahren).

Beim 3D-Druck werden Werkstücke - Druckteile - durch schichtweises Aufbringen von Material hergestellt. Dabei ist oftmals eine Verwendung von Trag- oder Stützstrukturen notwendig, um bei auskragenden Abschnitten eines jeweiligen Druckteils oder bei Hinterschnitten im Druckteil überhängendes Material zu stützen. Eine solche Struktur erstreckt sich von einer Grundplatte bis zu der zu stützenden Oberfläche. Stützstrukturen werden nach Abschluss des additiven Herstellungsverfahrens unter Verwendung traditioneller subtraktiver Technologien entfernt, um die endgültige Teilegeometrie zu erhalten.

Zum Herstellen einer solchen Stützstruktur wird im Zusammenhang mit einer Erstellung (mittels eines entsprechenden CAD-Systems) eines Modells des Druckteils ein Modell einer Stützstruktur für das Druckteil erzeugt. Das Erzeugen eines Modells einer Stützstruktur ist grundsätzlich an sich bekannt und erfolgt zum Beispiel automatisch oder teilweise automatisch mittels eines CAD-Systems zum Modellieren von 3D-Druckteilen. Ein Steuerungsprogramm zum Steuern eines 3D-Druckers verarbeitet die CAD-Daten des jeweiligen Druckteils und die CAD-Daten der oder jeder für das jeweilige Druckteil vorgesehenen Stützstruktur.

Das Entfernen einer Stützstruktur nach einem 3D-Druck, also das Entfernen einer realen Stützstruktur von einem realen Druckteil, ist ein zeitaufwändiger und vor allem aufgrund des Zeitaufwands ein vergleichsweise kostenintensiver Prozess, der die Komplexität der AM-Prozesskette stark erhöht. Aus diesem Grund wird versucht, Stützstrukturen zu minimieren und ihre Geometrie zu optimieren, um ihre spätere Entfernung zu vereinfachen.

Bislang wurden insoweit verschiedene, nachfolgend kurz skizzierte Strategien verfolgt, ggf. auch in kombinierter Form:

1. Stützstrukturen werden minimiert, indem eine optimale Teileorientierung gefunden wird, d.h. diejenige Orientierung des Druckteils, welche die geringste Anzahl von Stützstrukturen erfordert.

2. Die Geometrie der Stützstrukturen wird optimiert, um ihre Beseitigung zu erleichtern, zum Beispiel mit leicht wegzubrechenden Befestigungspunkten oder mit leicht zu bearbeitenden Geometrien.

3. Im Falle von Polymer-AM können Stützstrukturen aus löslichen Polymeren hergestellt werden, die zum Beispiel durch Eintauchen in Wasser entfernt werden können, ein Lösungsansatz, der ersichtlich nicht für alle Materialien anwendbar ist.

4. In bestimmten Fällen kann eine Stützstruktur von einer Oberfläche des Druckteils ausgehen und das Druckteil an einer anderen Stelle stützen, wodurch sich die Möglichkeit einer minimierten Stützstruktur ergibt. Diese Strategie erfordert jedoch eine weitere Nachbearbeitung der Teileoberflächen, von denen die Stützstruktur ausgeht.

Auch nach alledem bleiben bei einem AM-Prozess benötigte Stützstrukturen nachteilig, denn eine Stützstruktur bedeutet zumindest einen zusätzlichen Materialverbrauch und muss nach dem Abschluss des AM-Prozesses wieder entfernt werden.

Eine Aufgabe der Erfindung besteht entsprechend darin, eine 3D-Druckvorrichtung, ein eine 3D-Druckvorrichtung umfassendes System und ein Verfahren zum 3D-Druck anzugeben, die bzw. das die oben genannten Nachteile vermeidet oder zumindest reduziert.

In Bezug auf die 3D-Druckvorrichtung oder ein eine 3D-Druckvorrichtung umfassendes System wird diese Aufgabe mit den Merkmalen des Anspruchs 1 gelöst. Die 3D-Druckvorrichtung umfasst - in grundsätzlich an sich bekannter Art und Weise - eine Grundplatte oder der 3D-Druckvorrichtung ist eine solche Grundplatte räumlich und funktional zugeordnet. Auf der Grundplatte wird beim 3D-Druck das jeweilige Druckteil hergestellt. Zumindest beginnt dessen Herstellung auf der Grundplatte. Das die 3D-Druckvorrichtung umfassende System umfasst darüber hinaus und nach dem hier vorgeschlagenen Ansatz zumindest eine bei einem 3D-Druck zusammen mit der 3D-Druckvorrichtung verwendbare weitere Grundplatte oder der 3D-Druckvorrichtung ist eine solche weitere Grundplatte räumlich und funktional zugeordnet. Zur Unterscheidung von der zuerst genannten Grundplatte wird eine solche weitere Grundplatte im Folgenden als Tragschild bezeichnet. Das zumindest eine Tragschild ist unabhängig von der Grundplatte platzierbar (separat platzierbar), insbesondere im Bereich der 3D-Druckvorrichtung, also in einem Bereich, in dem mittels der 3D-Druckvorrichtung ein 3D-Druck erfolgen kann oder beim Betrieb der 3D-Druckvorrichtung erfolgt. Das Tragschild ist zum Beispiel mit Abstand von der Grundplatte über der Grundplatte und unabhängig von der Grundplatte platzierbar. Bei einem solchen System oder einer solchen 3D-Druckvorrichtung fungieren eine Oberfläche der Grundplatte und eine Oberfläche des zumindest einen Tragschilds als Basis für einen 3D-Druck (als Basis für einen AM-Prozess), also als Basis für ein mittels der 3D-Druckvorrichtung hergestelltes Druckteil.

In Bezug auf das Verfahren zum 3D-Druck (einen AM-Prozess) wird diese Aufgabe mit den Merkmalen des parallelen Verfahrensanspruchs (Anspruchs 7) gelöst. Das Verfahren basiert auf einer Verwendung des hier und im Folgenden beschrieben Systems oder einer Verwendung einer von einem solchen System umfassten 3D-Druckvorrichtung und umfasst die Verfahrensschritte des Platzierens zumindest eines unabhängig von der Grundplatte der 3D-Druckvorrichtung platzierbaren Tragschilds im Bereich der 3D-Druckvorrichtung, zum Beispiel oberhalb der Grundplatte der 3D-Druckvorrichtung, sowie die Verwendung der Grundplatte und des Tragschilds während des 3D-Drucks.

Der 3D-Druck kann damit - mittels der 3D-Druckvorrichtung und nach dem Verfahren zum 3D-Druck - zunächst und in grundsätzlich an sich bekannter Art und Weise auf der Grundplatte als Basis beginnen und während des 3D-Drucks wird das oder ein separat platzierbares Tragschild in dem Bereich, in dem der 3D-Druck erfolgt, platziert und deren Oberfläche fungiert während des 3D-Drucks als zusätzliche Basis für den 3D-Druck, also als zusätzliche Basis zum Ablagern von Material im Rahmen des 3D-Drucks.

Für die weitere Beschreibung gilt zur Vermeidung unnötiger Wiederholungen, dass Merkmale und Details, die im Zusammenhang mit dem genannten Verfahren zum 3D-Druck sowie eventueller Ausgestaltungen beschrieben sind, selbstverständlich auch im Zusammenhang mit und im Hinblick auf die zur Durchführung des Verfahrens eingerichtete 3D-Druckvorrichtung oder ein eine solche Vorrichtung umfassendes System und umgekehrt gelten. Dementsprechend kann das Verfahren auch mittels einzelner oder mehrerer Verfahrensmerkmale fortgebildet sein, die sich auf von der 3D-Druckvorrichtung oder dem System ausgeführte Verfahrensschritte beziehen, und das System oder die 3D-Druckvorrichtung kann entsprechend auch durch Mittel zur Ausführung von im Rahmen des 3D-Druckvorgangs ausgeführten Verfahrensschritten fortgebildet sein. Folglich gelten Merkmale und Details, die im Zusammenhang mit dem genannten Verfahren und eventueller Ausgestaltungen beschrieben sind, selbstverständlich auch im Zusammenhang mit und im Hinblick auf die zur Durchführung des Verfahrens bestimmte Vorrichtung und jeweils umgekehrt, so dass bezüglich der Offenbarung zu den einzelnen Aspekten der Erfindung stets wechselseitig Bezug genommen wird bzw. werden kann.

Die hier vorgeschlagene Neuerung ermöglicht die Herstellung von Druckteilen mit reduzierten Stützstrukturen. Stützstrukturen, die auch nach dem hier vorgeschlagenen Ansatz noch entstehen, brauchen nicht von der Grundplatte des 3D-Druckers ausgehen und/oder brauchen nicht an der Grundplatte des 3D-Druckers befestigt werden, was die Nachbearbeitung (Entfernung) erheblich erleichtert. Eine Höhe von auch nach dem hier vorgeschlagenen Ansatz noch entstehenden Stützstrukturen wird reduziert, was den Material-, Zeit- und Kostenaufwand für deren Herstellung und die Nachbearbeitung des eigentlichen Druckteils verringert. Langgestreckte Druckteile, die hohe Stützstrukturen benötigen, können wesentlich effizienter gedruckt werden, wodurch das Anwendungsspektrum des 3D-Drucks erweitert wird.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen Schutzes für die Merkmale oder Merkmalskombinationen eines abhängigen Anspruchs zu verstehen. Des Weiteren gilt im Hinblick auf eine Auslegung der Ansprüche sowie der Beschreibung, dass bei einer näheren Konkretisierung eines Merkmals in einem abhängigen Anspruch eine derartige Beschränkung in den jeweils vorangehenden Ansprüchen sowie einer allgemeineren Ausführungsform des gegenständlichen Verfahrens zum 3D-Druck / des gegenständlichen Systems / der gegenständlichen 3D-Druckvorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform des Systems umfasst dieses eine im Folgenden als Manipulator bezeichnete Positioniervorrichtung und bei einer entsprechenden Ausführungsform der 3D-Druckvorrichtung umfasst diese einen Manipulator oder dieser ist ein Manipulator räumlich und funktional zugeordnet. Auch eine 3D-Druckvorrichtung, welcher ein Manipulator räumlich und funktional zugeordnet ist, zum Beispiel indem der Manipulator an der 3D-Druckvorrichtung angebracht und insoweit mit der 3D-Druckvorrichtung verbunden ist, ist ein System mit einer 3D-Druckvorrichtung und einem Manipulator sowie eine 3D-Druckvorrichtung mit einem Manipulator.

Mittels des Manipulators ist das Tragschild im Bereich der 3D-Druckvorrichtung, zum Beispiel oberhalb von deren Grundplatte und mit Abstand von der Grundfläche, platzierbar und wird bei einem Verfahren zum 3D-Druck entsprechend platziert. Anstelle genau eines Manipulators ist grundsätzlich auch mehr als ein Manipulator (Manipulatorgruppe) einsetzbar, nämlich zum Beispiel indem genau ein Tragschild mittels zumindest zweier Manipulatoren platzierbar ist und platziert wird und/oder indem zumindest zwei Tragschilde mittels jeweils zumindest eines Manipulators (also mittels zumindest zweier Manipulatoren) platzierbar sind und platziert werden. Ein System oder eine 3D-Druckvorrichtung mit mehr als einem Manipulator sowie eine Verwendung mehr als eines Manipulators im Rahmen des Verfahrens zum 3D-Druck ist Bestandteil der Erfindung.

Unter dem Begriff Manipulator werden hier und im Folgenden Positioniervorrichtungen in Form von oder nach Art einer Werkzeugmaschine oder eines Roboterarms eines Industrieroboters zusammengefasst. Auf die konkrete Kinematik, also auf die Anzahl der Freiheitsgrade, ob es sich um rotatorische und/oder translatorische Freiheitsgrade handelt, und auf die Abfolge rotatorischer oder translatorischer Freiheitsgrade entlang einer jeweiligen kinematischen Kette kommt es dabei nicht an und jede mögliche Kinematik unterfällt dem hier verwendeten Begriff Manipulator. Wesentlich ist, dass der Manipulator im Bereich des sogenannten TCP (tools center point) ein Tragschild aufweist oder mittels eines Werkzeugs, zum Beispiel mittels eines Werkzeugs in Form eines Greifers oder dergleichen, ein Tragschild aufnehmen kann.

Ein Manipulator (der oder jeder Manipulator) erlaubt in grundsätzlich an sich bekannter Art und Weise eine automatische und exakte Positionierung eines Werkzeugs oder eines Bauteils und damit auch eine automatische zeitlich und räumlich exakte Positionierung (Positionierung und Orientierung) des bei der hier vorgeschlagenen Neuerung vorgesehenen Tragschilds. Bei einer mehrfachen Wiederholung eines 3D-Druckvorgangs zur sukzessiven Herstellung gleicher Druckteile gewährleistet die zeitlich und räumlich exakte Positionierung des Tragschilds mittels des Manipulators gleiche Formen und gleiche Dimensionen der jeweiligen Druckteile (als Druckteil wird hier und im Folgenden das beim 3D-Druck entstehende Produkt bezeichnet).

Bevorzugt wird ein Ort für die Platzierung des Tragschilds automatisch ermittelt, nämlich der Ort für die Platzierung des Tragschilds mittels des Manipulators. Eingangs wurde bereits erwähnt, dass im Zuge eine Modellierung eines Druckteils ein Modell einer Stützstruktur für das Druckteil erzeugt wird. Zur Ermittlung des Orts für die Platzierung des Tragschilds wird zum Beispiel wie folgt vorgegangen: In den CAD-Daten des Modells der Stützstruktur wird eine zur Grundplatte (zur virtuellen Grundplatte oder einem Modell der Grundplatte) parallele Ebene - eine virtuelle Ebene - in vertikaler Richtung verschoben, bis sich diese innerhalb des Modells der Stützstruktur in einem vorgegebenen oder vorgebbaren Abstand von dem Druckteil befindet. Dieser Abstand ist zum Beispiel in Form eines Mindestabstands (vertikaler Mindestabstand) vorgegeben. Die so gefundene Position dieser Ebene (Höhe der Ebene über der Grundplatte) ist die Vertikalposition für eine spätere automatische Platzierung des Tragschilds. Die restlichen Koordinaten für die spätere automatische Platzierung des Tragschilds ergeben sich zum Beispiel aufgrund des geometrischen Schwerpunkts einer Schnittfläche dieser Ebene am Ort der gefundenen Vertikalposition. Mit der Vertikalposition und den Koordinaten beispielsweise des geometrischen Schwerpunkts liegen drei Raumkoordinaten für die spätere automatische Platzierung des Tragschilds fest und bei der automatischen Platzierung des Tragschilds mittels des Manipulators wird das Tragschild zum Beispiel so platziert, dass sich dessen Oberfläche in der ermittelten Vertikalposition befindet und dass sich dessen Zentrum (zum Beispiel bei einem kreisförmigen, quadratischen oder rechteckigen Tragschild) am Ort der restlichen ermittelten Raumkoordinaten befindet. Wenn im Zuge des 3D-Drucks der Druckvorgang die zuvor ermittelte Vertikalposition erreicht, zum Beispiel zum Abschluss des Auftrags einer Materialschicht unmittelbar unterhalb der ermittelten Vertikalposition, wird das Tragschild mittels des Manipulators platziert. Damit sind der Ort der automatischen Platzierung und ein Zeitpunkt der automatischen Platzierung automatisch ermittelbar. Diese Ermittlung erfolgt bei einer bevorzugten Ausführungsform des Verfahrens zum 3D-Druck automatisch und im Rahmen des Verfahrens zum 3D-Druck erfolgt auf Basis des ermittelten Orts und des ermittelten Zeitpunkts die automatische Platzierung des Tragschilds: Das Tragschild wird während des 3D-Drucks mittels des oder eines Manipulators zu einem automatisch ermittelten Zeitpunkt an einem automatisch ermittelten Ort platziert. Die Ermittlung des Zeitpunkts und des Orts erfolgt bevorzugt zeitlich vor dem Beginn des 3D-Drucks und der ermittelte Zeitpunkt sowie der ermittelte Ort sind für eine Mehrzahl gleicher 3D-Druckvorgänge, also für eine Mehrzahl von 3D-Druckvorgängen jeweils gleicher Druckteile, verwendbar und werden im Rahmen des Verfahrens im Falle einer Mehrzahl gleicher 3D-Druckvorgänge für diese verwendet.

Das Verfahren wird mittels einer Steuerungseinrichtung zum Steuern und/oder Überwachen des 3D-Drucks ausgeführt. Im Rahmen des Verfahrens erfolgen die automatische Ermittlung von Zeitpunkt und Ort für die automatische Platzierung wie oben beschrieben sowie die automatische Platzierung selbst wie hier und nachfolgend beschrieben.

Die oben genannte Aufgabe wird auch mit einer zur Ausführung des hier und im Folgenden beschriebenen Verfahrens bestimmten und eingerichteten Steuerungseinrichtung (oder mit einer zur Ansteuerung der von dem hier und im Folgenden beschriebenen System umfassten Vorrichtungen, nämlich des 3D-Druckers und des mindestens einen Manipulators, bestimmten und eingerichteten Steuerungseinrichtung) gelöst. Das Verfahren zum 3D-Druck ist zur automatischen Ausführung bevorzugt in Form eines als Steuerungsprogramm fungierenden Computerprogramms realisiert. Die Erfindung ist damit einerseits auch ein Computerprogramm mit durch einen Computer ausführbaren Programmcodeanweisungen und andererseits ein Speichermedium mit einem derartigen Steuerungsprogramm, also ein Computerprogrammprodukt mit Programmcodemitteln, sowie schließlich auch eine Steuerungseinrichtung oder ein eine Steuerungseinrichtung umfassendes System der hier und im Folgenden beschriebenen Art, wobei in einen Speicher der Steuerungseinrichtung als Mittel zur Ausführung des Verfahrens und seiner Ausgestaltungen ein solches Steuerungsprogramm geladen oder ladbar ist.

Wenn im Folgenden Verfahrensschritte oder Verfahrensschrittfolgen beschrieben werden, bezieht sich dies zumindest im Zusammenhang mit der Verwendung des Begriffs "automatisch" auf Aktionen, die aufgrund des Steuerungsprogramms oder unter Kontrolle des Steuerungsprogramms erfolgen. Anstelle eines Steuerungsprogramms mit einzelnen Programmcodeanweisungen kann die Implementierung des hier und im Folgenden beschriebenen Verfahrens auch in Form von Soft- und/oder Firmware erfolgen. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Soft- und Firmware umfasst sind.

Bei einer nochmals weiteren Ausführungsform des hier vorgeschlagenen Verfahrens wird anhand der virtuellen Schnittfläche mit dem Modell einer Stützstruktur (virtuelle Stützstruktur) auch ein später beim 3D-Druck jeweils zu verwendendes Tragschild ausgewählt. In der ermittelten Vertikalposition hat die virtuelle Schnittfläche eine aufgrund der CAD-Daten der virtuellen Stützstruktur ermittelbare Form. Anhand charakteristischer Daten der ermittelten Form ist automatisch eine notwendige Fläche eines später zu verwendenden Tragschilds ermittelbar und im Rahmen einer entsprechenden Ausführungsform des Verfahrens zum 3D-Druck wird die notwendige Fläche eines später zu verwendenden Tragschilds automatisch ermittelt und es wird ebenso automatisch ein passendes Tragschild aus einer Gruppe von Tragschilden ausgewählt und beim 3D-Druck verwendet. Die notwendige Fläche eines später zu verwendenden Tragschilds wird zum Beispiel automatisch anhand des geometrischen Schwerpunkts der virtuellen Schnittfläche mit der virtuellen Stützstruktur einerseits sowie einer maximalen Entfernung zwischen diesem Schwerpunkt und einem Randpunkt der Schnittfläche ermittelt. Der geometrische Schwerpunkt und die maximale Entfernung von diesem Schwerpunkt zu einem Randpunkt der Schnittfläche sind nicht abschließende Beispiele für die vorstehend erwähnten charakteristischen Daten. Das für den späteren 3D-Druck auszuwählende Tragschild ist dann zum Beispiel ein kreisförmiges Tragschild mit einem Radius, der zumindest der ermittelten maximalen Entfernung entspricht, oder ein quadratisches Tragschild mit einer Seitenlänge, die zumindest dem Doppelten der ermittelten maximalen Entfernung entspricht.

Bei einer Ausführungsform des Systems, der 3D-Druckvorrichtung oder des Verfahrens zum 3D-Druck wird das Tragschild während eines 3D-Druckvorgangs mittels des Manipulators (oder mittels zumindest eines Manipulators aus einer Gruppe von Manipulatoren) zumindest zeitweise in Position gehalten. Diese Variante kommt speziell für 3D-Druckverfahren in Betracht, bei denen das jeweilige Material extrudiert wird. Das Tragschild wird im Bereich der 3D-Druckvorrichtung platziert und dort zumindest zeitweise in Position gehalten, sobald beim 3D-Druck eine Höhe des Druckteils erreicht ist, ab der im Weiteren ein auskragender Abschnitt des Druckteils oder ein Hinterschnitt entstehen kann. Bei der Fortsetzung des 3D-Drucks entsteht oder entstehen auf der Oberfläche des Tragschilds eine Stützstruktur, ein Teil einer Stützstruktur und/oder ein Teil des Werkstücks. Das Tragschild wird zumindest zeitweise in Position gehalten, nämlich in genau der Position, in der das Tragschild ursprünglich platziert wurde. Dieses Halten kann für den Rest des 3D-Drucks zum Herstellen jeweils eines Druckteils erfolgen. Dieses Halten kann auch während einer begrenzten Haltedauer erfolgen und vor dem Abschluss des 3D-Drucks zum Herstellen jeweils eines Druckteils enden. Bei einer bevorzugten Ausführungsform des Verfahrens zum 3D-Druck wird eine jeweils erforderliche Haltedauer in Abhängigkeit von einer Geometrie eines jeweiligen Druckteils, nämlich in Abhängigkeit von einer Geometrie eines auskragenden Abschnitts oder eines Hinterschnitts des Druckteils, sowie in Abhängigkeit von beim 3D-Druck wirksamen Parametern automatisch bestimmt.

Bei einer Ausführungsform des Systems, der 3D-Druckvorrichtung oder des Verfahrens zum 3D-Druck ist das Tragschild während eines 3D-Druckvorgangs mittels des Manipulators (oder mittels zumindest eines Manipulators aus einer Gruppe von Manipulatoren) in einem oder auf einem beim 3D-Druck verwendeten Material platzierbar bzw. wird während eines 3D-Druckvorgangs platziert. Diese Variante kommt speziell für 3D-Druckverfahren in Betracht, bei denen das jeweilige Material in Pulverform vorliegt (powder bed). Das Tragschild wird im Bereich der 3D-Druckvorrichtung in oder auf dem jeweiligen Material platziert. Das Tragschild kann dort bis zum Abschluss des 3D-Drucks zum Herstellen des jeweiligen Druckteils verbleiben.

Vorteilhaft weist ein in oder auf dem beim 3D-Druck verwendeten Material platzierbares oder platziertes Tragschild (im Folgenden oftmals kurz und zusammenfassend als "auf dem Material platzierbar/platziert" bezeichnet) an seiner Unterseite zumindest ein Positionierelement auf. Das oder jedes Positionierelement verhindert ein unerwünschtes Verschieben des Tragschilds auf dem beim 3D-Druck verwendeten Material, also auf dem sogenannten powder bed.

Vorteilhaft sind zumindest zwei gegenüberliegende Seiten eines auf dem beim 3D-Druck verwendeten Material platzierbaren oder platzierten Tragschilds abgerundet oder gewölbt. Solche Seiten verhindern (ebenfalls) ein unerwünschtes Verschieben des Tragschilds auf dem beim 3D-Druck verwendeten Material, also auf dem sogenannten powder bed. Bei einem Verfahren zum 3D-Druck nach dem hier vorgeschlagenen Ansatz ist bei einer Verwendung eines Tragschilds mit solchen abgerundeten oder gewölbten Seiten vorteilhaft vorgesehen, dass das Tragschild mit seinen abgerundeten oder gewölbten Seiten quer oder zumindest im Wesentlichen quer zu einer Bewegungsrichtung einer Rakel oder Walze der 3D-Druckvorrichtung ausgerichtet wird. Wenn die Rakel oder Walze bei der Vorbereitung einer neuen Schicht des beim 3D-Druck verwendeten Materials über das Tragschild hinwegstreicht, verhindern dessen abgerundete oder gewölbte Seiten und deren Ausrichtung quer zu einer Bewegungsrichtung der Rakel oder Walze ein Anstoßen am Tragschild und ein eventuelles Verschieben des Tragschilds aufgrund des Anstoßens.

Die hier vorgeschlagene Neuerung kann in jeder AM-Anwendung vorteilhaft eingesetzt werden, insbesondere aber in Anwendungsfällen, in denen die gedruckten Teile sehr hoch sind und Stützstrukturen daher kostspielig und mühsam zu entfernen sind.

Nachfolgend werden Ausführungsbeispiele der Erfindung anhand der Zeichnung näher erläutert. Einander entsprechende Gegenstände oder Elemente sind in allen Figuren mit den gleichen Bezugszeichen versehen.

Die Ausführungsbeispiele sind nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1 eine 3D-Druckvorrichtung ("3D-Drucker"), ein mittels der 3D-Druckvorrichtung hergestelltes Druckteil und eine Stützstruktur unterhalb eines auskragenden Abschnitts des Druckteils,

FIG 2 ein Druckteil wie in FIG 1 zusammen mit einer im Vergleich zu FIG 1 kleineren Stützstruktur auf einem von einem Manipulator gehaltenen, separat platzierbaren Tragschild,

FIG 3 ein mittels eines Manipulators während des 3D-Drucks auf einem beim 3D-Druck verwendeten Material platziertes Tragschild,

FIG 4 ein auf einem gemäß FIG 3 platzierten Tragschild fortgesetzter 3D-Druck mit einer auf dem Tragschild entstandenen Stützstruktur,

FIG 5 unterschiedliche Ausführungsformen eines Tragschilds,

FIG 6 einen Ablauf beim Platzieren eines Tragschilds auf einem beim 3D-Druck verwendeten Material,

FIG 7 ein teilweise fertiggestelltes Druckteil mit in Bezug auf das Druckteil eingezeichneten Parametern und

FIG 8 einen Ablauf eines Verfahrens zum 3D-Druck nach dem hier vorgeschlagenen Ansatz in Form eines Flussdiagramms.

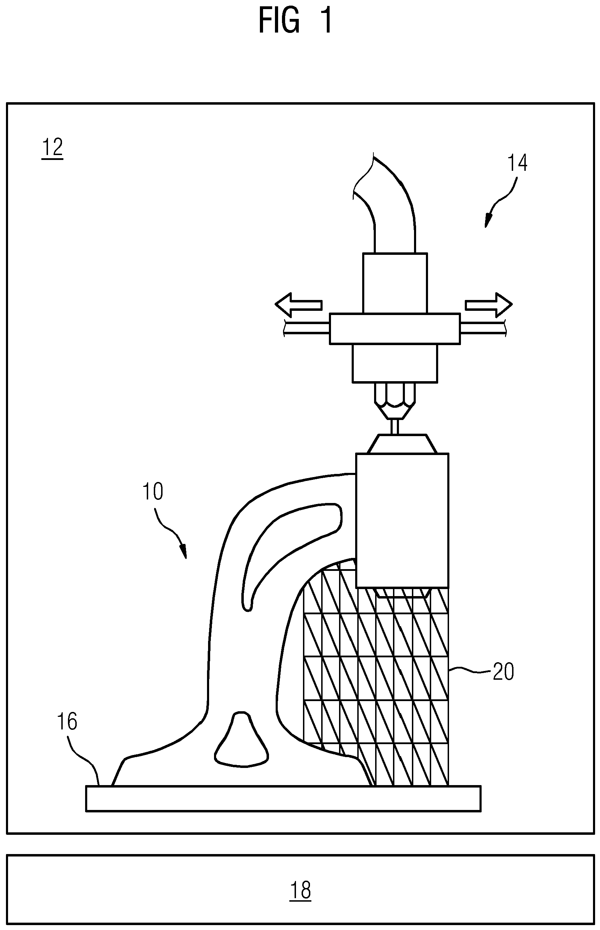

Die Darstellung in FIG 1 zeigt exemplarisch ein mittels eines 3D-Druckverfahrens hergestelltes (ein mittels eines AM-Verfahrens hergestelltes) und im Folgenden als Druckteil 10 bezeichnetes Werkstück. Die Herstellung erfolgt mittels einer nur schematisch angedeuteten 3D-Druckvorrichtung (3D-Drucker, AM-Vorrichtung) 12. Diese wird im Folgenden gemäß dem üblichen Sprachgebrauch mitunter kurz als 3D-Drucker 12 bezeichnet. Bei jeder Verwendung des Begriffs "3D-Drucker" 12 sind allgemeine Begriffe wie "3D-Druckvorrichtung" 12 oder "AM-Vorrichtung" jeweils mitzulesen. Die 3D-Druckvorrichtung 12 / der 3D-Drucker 12 umfasst in grundsätzlich an sich bekannter Art und Weise einen üblicherweise beweglichen sogenannten Druckkopf 14, eine Grundplatte 16, welche als Grundfläche für den 3D-Druck fungiert, und eine Steuerungseinrichtung 18.

Mittels des Druckkopfs 14 erfolgt der bei einem 3D-Druck zum Beispiel nach dem FDM-Verfahren oder dem FFF-Verfahren (FDM - Fused Deposition Modeling; FFF - Fused Filament Fabrication) oder dergleichen übliche Materialausstoß und -auftrag (Extrusion). Bei anderen 3D-Druckverfahren, wie zum Beispiel dem selektiven Laserschmelzen (SLM - Selective Laser Melting; LPBF - Laser Powder Bed Fusion) oder selektiven Lasersintern (SLS - Selective Laser Sintering) erfolgt mittels des Druckkopfs 14 eine gerichtete Abgabe eines Laser- oder Elektronenstahls insbesondere in ein beim 3D-Druck verwendetes, insbesondere pulverförmiges Material.

Für den Druckkopf 14 in FIG 1 ist in der dortigen schematisch vereinfachten Darstellung in FIG 1 nur dessen Beweglichkeit in einer kartesischen Raumrichtung angedeutet. Ein beweglicher Druckkopf 14 ist in gleicher oder ähnlicher Art und Weise auch in den anderen kartesischen Raumrichtungen beweglich oder eine ausreichende Beweglichkeit des Druckkopfes 14 wird mittels anderer grundsätzlich von Industrierobotern, Werkzeugmaschinen oder 3D-Druckern ebenfalls an sich bekannter Kinematiken (translatorische und/oder rotatorische Freiheitsgrade) erreicht.

Auf die Kinematik des 3D-Druckers 12 kommt es für die hier vorgeschlagene Neuerung nicht an und diese ist grundsätzlich mit jedem 3D-Drucker 12 und einer jeweiligen Kinematik verwendbar. Ebenso kommt es für die hier vorgeschlagene Neuerung auf das konkrete Verfahren des 3D-Drucks (FDM, FFF, SLM, LPBF etc.) nicht an und diese ist grundsätzlich mit jedem 3D-Druckverfahren - jedem Verfahren der sogenannten additiven Fertigung (additive manufacturing) - verwendbar.

Auf der Oberfläche der Grundplatte 16 erfolgt oder beginnt die Herstellung des Druckteils 10. Die Steuerungseinrichtung 18 ist zur grundsätzlich an sich bekannten Steuerung und Überwachung der 3D-Druckvorrichtung 12 vorgesehen und ist selbst ebenfalls grundsätzlich an sich bekannt (umfasst also zum Beispiel einen Speicher, in den ein Steuerungsprogramm geladen ist und einen Mikroprozessor zur Ausführung des Steuerungsprogramms).

Bei auskragenden Druckteilen 10, Druckteilen 10 mit einem Hinterschnitt oder dergleichen ist bisher oftmals eine im Zuge des 3D-Druckverfahrens ebenso wie das Druckteil 10 selbst mittels des 3D-Druckers 12 hergestellte und im Folgenden als Stützstruktur 20 bezeichnete Trag- oder Stützstruktur 20 erforderlich. Beispielhaft ist eine solche Stützstruktur 20 in der Darstellung in FIG 1 unterhalb des auskragenden Abschnitts des Druckteils 10 und ausgehend von der Grundplatte 16 gezeigt. Eine solche Stützstruktur 20 bedeutet zusätzlichen Materialaufwand und nach Abschluss des 3D-Druckvorgangs muss die Stützstruktur 20 (das von der Stützstruktur 20 umfasste Material) wieder entfernt werden, sodass in diesem Zusammenhang ein zusätzlicher Arbeitsschritt mit entsprechendem Zeitaufwand anfällt.

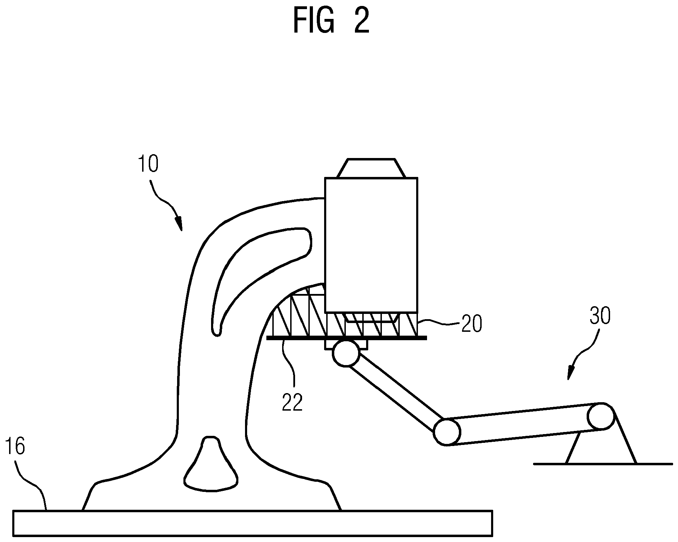

Die Darstellung in FIG 2 zeigt - lediglich beispielhaft - das Druckteil 10 aus FIG 1 auf der Grundplatte 16. Der 3D-Drucker 12, auf dessen konkrete Kinematik es - wie oben bereits erwähnt - gar nicht ankommt, ist in der Darstellung in FIG 2 und auch in den weiteren, folgenden Darstellungen nicht mehr gezeigt und insoweit sei jeweils auf die Darstellung in FIG 1 und die dortigen Erläuterungen verwiesen.

Gegenüber der in der Darstellung in FIG 1 gezeigten Situation ist bei der in der Darstellung in FIG 2 gezeigten Situation die dortige Stützstruktur 20 erkennbar deutlich kleiner (eine wirksame Höhe der Stützstruktur 20 ist kleiner und entsprechend ist auch das Gesamtvolumen der Stützstruktur 20 kleiner und für die Stützstruktur 20 wird weniger Material benötigt).

Die Darstellung in FIG 2 zeigt in prinzipieller Art und Weise den zentralen Aspekt der hier vorgeschlagenen Neuerung: Die Herstellung der Druckteils 10 erfolgt nämlich zumindest zum Teil auf zumindest einem unabhängig von der Grundplatte 16 (engl.: build plate) und oberhalb der Grundplatte 16 platzierbaren Tragschild 22 (support plate). Bei der Herstellung des Druckteils 10 fungieren dann einerseits die Oberfläche der Grundplatte 16 und andererseits eine Oberfläche des mindestens einen Tragschilds 22 als Basis (als Auflage/Auflagefläche) für den 3D-Druck. Es sei darauf hingewiesen, dass die Herstellung des Druckteils 10 auch eine bei dessen Herstellung eventuell erforderliche Herstellung einer Stützstruktur 20 umfasst. Ausführlicher könnte man also formulieren: Bei der Herstellung des Druckteils 10 und/oder einer Stützstruktur 20 für das Druckteil 10 fungieren dann die Oberfläche der Grundplatte 16 und/oder die Oberfläche des mindestens einen Tragschilds 22 als Basis (als Auflage/Auflagefläche) für den 3D-Druck.

Die Position des Tragschilds 22 ergibt sich zum Beispiel wie eingangs beschrieben, nämlich aufgrund einer virtuellen Schnittfläche mit einem Modell der Stützstruktur 20.

Die Darstellung in FIG 2 zeigt auch - allerdings stark vereinfacht und auf wesentliche Teile reduziert - ein Beispiel für ein hier vorgeschlagenes System zum 3D-Druck. Das System umfasst die 3D-Druckvorrichtung 12 / den 3D-Drucker 12, von der bzw. von dem in der Darstellung in FIG 2 nur deren bzw. dessen Grundplatte 16 gezeigt ist, und das im Bereich des 3D-Druckers 12 unabhängig von dessen Grundplatte 16 platzierbare Tragschild 22. Bei einem zum Platzieren des Tragschilds 22 vorgesehenen Manipulator 30 umfasst das System auch den Manipulator 30.

Eine automatische Platzierung des Tragschilds 22 mittels des Manipulators 30 erfolgt an dem aufgrund der virtuellen Schnittfläche mit dem Modell der Stützstruktur 20 ermittelten Ort und zu dem Zeitpunkt, an dem der 3D-Druck die in dem ermittelten Ort enthaltene Vertikalposition erreicht. Die automatische Platzierung des Tragschilds 22 erfolgt mittels des Manipulators 30 sowie mittels der Steuerungseinrichtung 18, welche den Manipulator 30 ansteuert, damit dieser zu dem jeweils ermittelten Zeitpunkt das Tragschild 22 an dem jeweils ermittelten Ort platziert.

Die in FIG 2 dargestellte Situation zeigt einen (genau einen) Manipulator 30. Eine Mehrzahl von Manipulatoren 30 ist als Option möglich. Die 3D-Druckvorrichtung 12 umfasst also zumindest einen Manipulator 30 oder der 3D-Druckvorrichtung 12 ist zumindest ein Manipulator 30 zugeordnet. Es handelt sich also um eine 3D-Druckvorrichtung 12 mit zumindest einem Manipulator 30 bzw. ein System, welches eine 3D-Druckvorrichtung 12 sowie zumindest einen Manipulator 30 umfasst. Mittels des oder eines Manipulators 30 ist das Tragschild 22 oder zumindest ein Tragschild 22 im Bereich der 3D-Druckvorrichtung 12, zum Beispiel oberhalb der Grundplatte 16, platzierbar und wird im Rahmen eines Verfahrens zum 3D-Druck mittels des oder eines Manipulators 30 im Bereich der 3D-Druckvorrichtung 12, zum Beispiel oberhalb der Grundplatte 16, platziert.

Die Darstellung genau eines Manipulators 30 und genau eines Tragschilds in FIG 2 sowie auch in einigen nachfolgenden Figuren ist lediglich beispielhaft und der schematisch vereinfachten Darstellung des jeweiligen Ausführungsbeispiels geschuldet. Grundsätzlich kommt anstelle genau eines Manipulators 30 jeweils auch eine Mehrzahl von Manipulatoren 30 in Betracht. Die weitere Beschreibung wird allerdings auf Basis der Darstellung in den Figuren für genau ein Tragschild 22 und genau einen Manipulator 30 fortgesetzt. Dabei sind eine Mehrzahl von Tragschilden 22 und/oder eine Mehrzahl von Manipulatoren 30 stets mitzulesen. In Bezug auf eine mitzulesende Mehrzahl von Manipulatoren 30 ist des Weiteren stets mitzulesen, dass genau ein Tragschild 22 mittels zumindest zweier Manipulatoren 30 platzierbar ist und platziert wird und/oder zumindest zwei Tragschilde 22 mittels jeweils zumindest eines Manipulators 30 platzierbar sind und platziert werden.

Der in der Darstellung in FIG 2 und auch in einigen weiteren Figuren gezeigte Manipulator 30 ist dort exemplarisch mit einer sogenannten Knickarmstruktur/kinematik gezeigt. Wie eingangs bereits vorausgeschickt, kommt es auf die konkrete Kinematik des Manipulators 30 nicht an und die Darstellung (in dieser Figur und in allen weiteren Figuren) ist ganz und gar beispielhaft.

Bei der in FIG 2 gezeigten Situation besteht eine Besonderheit darin, dass das Tragschild 22 während eines 3D-Druckvorgangs mittels des Manipulators 30 zumindest zeitweise in Position gehalten wird oder während des gesamten 3D-Druckvorgangs mittels des Manipulators 30 in Position gehalten wird. Indem das Tragschild 22 mittels des Manipulators 30 zumindest zeitweise in Position gehalten wird, kann während des 3D-Druckvorgangs auf der Oberfläche des Tragschilds 22 eine Stützstruktur 20 und/oder ein Teil des Druckteils 10 hergestellt werden. Das mittels des Manipulators 30 zumindest zeitweise (während einer Haltedauer) in Position gehaltene Tragschild 22 tritt an die Stelle einer zuvor auf der Grundplatte 16 hergestellten Stützstruktur 20, nämlich an die Stelle von zumindest einem Teil einer von der Grundplatte 16 ausgehenden Stützstruktur 20.

Zum Platzieren und zum Halten des Tragschilds 22 trägt der Manipulator 30 dieses, indem das Tragschild 22 an dessen freiem Ende (am freien Ende des letzten Elements von dessen kinematischer Kette; sogenannter tool center point, TCP) angebracht ist oder indem das Tragschild 22 mittels eines Werkzeugs an dessen freiem Ende, insbesondere mittels eines Greifers oder dergleichen, aufgenommen wird.

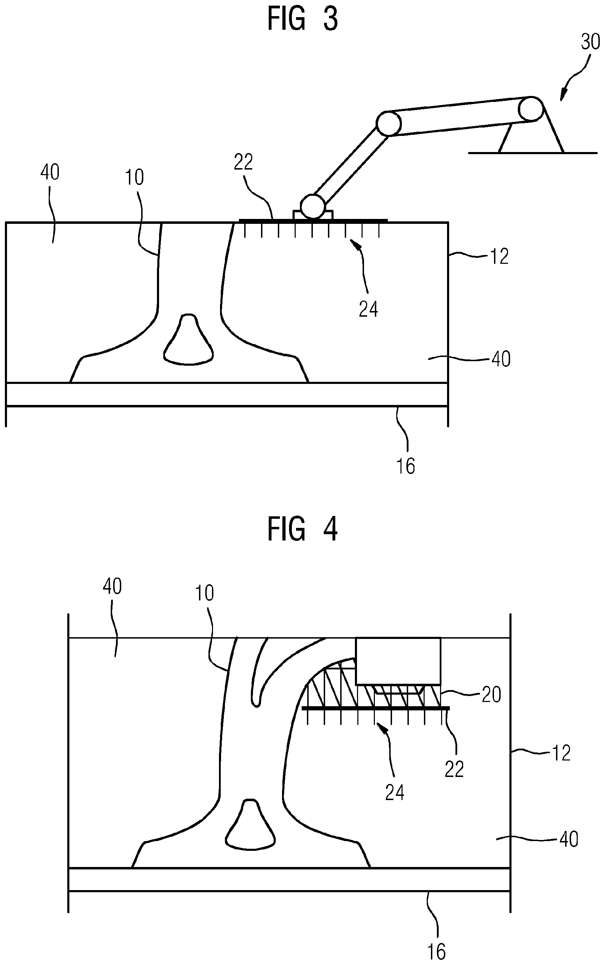

Die Darstellung in FIG 3 zeigt einen Teil eines 3D-Druckers 12 und eine Momentaufnahme beim 3D-Druck. Bei der dort gezeigten Situation wird ebenfalls mittels eines Manipulators 30 ein Tragschild 22 im Bereich der 3D-Druckvorrichtung 12 und mit Abstand von der Grundplatte 16 oberhalb der Grundplatte 16 platziert. Hier wird das Tragschild 22 allerdings während des 3D-Druckvorgangs und mittels des Manipulators 30 auf einem beim 3D-Druck, nämlich einem 3D-Druck nach einem SLM-, SLS- oder LPBF-Verfahren oder dergleichen (powder bed AM), verwendeten Material 40 platziert; das Tragschild 22 liegt mit seiner Unterseite auf der Oberfläche des Materials 40. Das Material 40 befindet sich dabei in grundsätzlich an sich bekannter Art und Weise in einem dafür bestimmten Teil des 3D-Druckers 12. Das Tragschild 22 ruht nach der Platzierung mittels des Manipulators 30 auf dem beim 3D-Druck verwendeten Material 40 und eine Oberfläche des Tragschilds 22 fungiert dort - in gleicher Art und Weise wie oben beschrieben - als zusätzliche Basis für den 3D-Druck. Während des 3D-Drucks kann auf der Oberfläche des Tragschilds 22 eine Stützstruktur 20 und/oder ein Teil des Druckteils 10 hergestellt werden.

Die Darstellung in FIG 4 zeigt eine weitere Momentaufnahme beim 3D-Druck, nämlich eine Momentaufnahme eines zeitlich nach der in der Darstellung in FIG 3 gezeigten Situation fortgesetzten 3D-Drucks. Ersichtlich ist der Manipulator 30, mittels dessen zuvor das Tragschild 22 platziert wurde, zurückgezogen; der Manipulator 30 kann das Tragschild 22 greifen, platzieren und wieder loslassen und weist dafür ein entsprechendes Werkzeug auf. Sobald der Manipulator 30 das Tragschild 22 platziert und wieder losgelassen hat, ist die Fortsetzung des 3D-Drucks oberhalb des Tragschilds 22 möglich. Bei der in der Darstellung in FIG 4 gezeigten Situation ist (ähnlich wie in der in FIG 2 gezeigten Situation) auf der Oberfläche des Tragschilds 22 eine Stützstruktur 20 entstanden und an die Stützstruktur 20 schließt aufgrund des fortgesetzten 3D-Drucks bereits abschnittsweise das Druckteil 10 an.

Auch die Darstellungen in FIG 3 und FIG 4 zeigen - allerdings stark vereinfacht und auf wesentliche Teile reduziert - ein Beispiel für ein hier vorgeschlagenes System zum 3D-Druck. Das System umfasst die 3D-Druckvorrichtung 12, den 3D-Drucker 12, mit deren bzw. dessen Grundplatte 16 und das im Bereich des 3D-Druckers 12 unabhängig von dessen Grundplatte 16 separat platzierbare Tragschild 22. Bei einem zum Platzieren des Tragschilds 22 vorgesehenen Manipulator 30 umfasst das System auch hier den Manipulator 30.

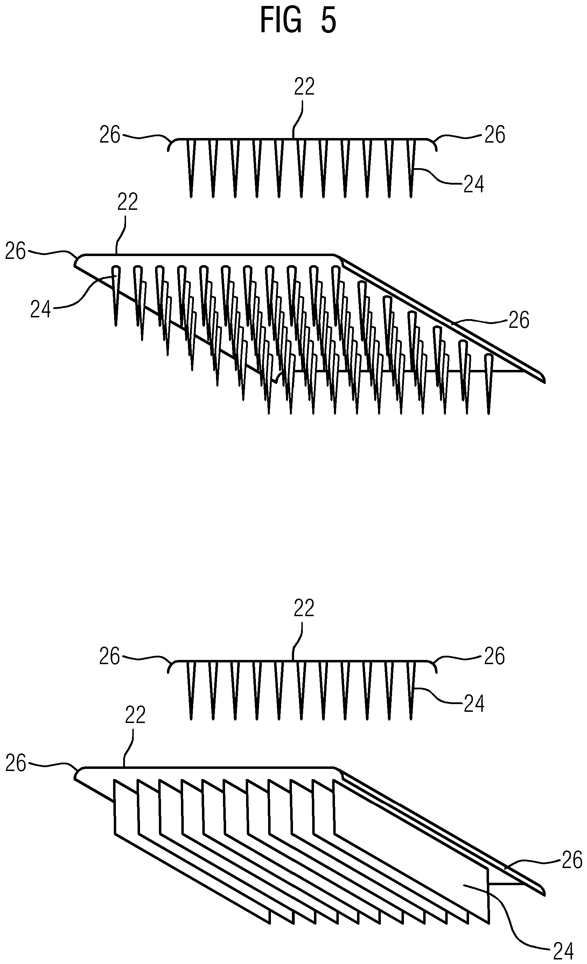

Die Darstellungen in FIG 3 und FIG 4 zeigen - schematisch vereinfacht - an der Unterseite des Tragschilds 22 optionale Positionierelemente 24. In der zweidimensionalen Darstellung in FIG 3 und FIG 4 erscheinen diese als vom Tragschild 22 ausgehende Linien. Tatsächlich handelt es sich bei den Positionierelementen 24 beispielsweise um langgestreckte rippenförmige Abstellungen oder stachel- oder nagelförmige Abstellungen. Dies ist beispielhaft in der Darstellung in FIG 5 gezeigt, die in einem oberen und einem unteren Bereich jeweils in einer Seitenansicht und in einer isometrischen Ansicht ein Tragschild 22 mit Positionierelementen 24 (jeweils nur eines mit der Bezugsziffer bezeichnet) in der zuvor erwähnten Form zeigt. Grundsätzlich ist ein einzelnes Positionierelement 24 ausreichend, zum Beispiel eine einzelne langgestreckte rippenförmige oder stachel- oder nagelförmige Abstellung. Das Positionierelement 24 oder die Positionierelemente 24 ist bzw. sind mit dem Tragschild 22 vorzugsweise einstückig verbunden. Eine Hauptachse des oder jedes Positionierelements 24 bildet mit einer durch das Tragschild 22 definierten Ebene vorzugsweise einen rechten Winkel oder im Wesentlichen einen rechten Winkel.

Ein Positionierelement 24 oder eine Mehrzahl von Positionierelementen 24 unter dem Tragschild 22 verhindert bzw. verhindern bei einem auf dem beim 3D-Druck verwendeten Material 40 platzierten Tragschild 22 ein unerwünschtes Verschieben des Tragschilds 22 und gewährleistet bzw. gewährleisten insoweit eine dauerhaft exakte Position des Tragschilds 22 nach dessen Platzierung auf dem beim 3D-Druck verwendeten Material 40.

Die Darstellung in FIG 5 zeigt darüber hinaus eine grundsätzlich optionale Form des Tragschilds 22. Danach sind bei dem Tragschild 22 zumindest zwei gegenüberliegende Seiten 26 abgerundet oder gewölbt, zum Beispiel - wie gezeigt - viertelkreisförmig gewölbt. Solche abgerundeten oder gewölbten Seiten 26 oder Kanten des Tragschilds 22 werden im Folgenden zusammenfassend als "gewölbt" bezeichnet. Bei einem Tragschild 22 mit zumindest zwei gewölbten, gegenüberliegenden Seiten 26 wird das Tragschild 22 auf dem beim 3D-Druck verwendeten Material 40 so platziert, dass die gewölbten Seiten 26 quer oder zumindest im Wesentlichen quer zu einer Bewegungsrichtung einer zum Auftragen einer neuen Materialschicht bestimmten Rakel oder Walze des 3D-Druckers 12 ausgerichtet sind. So verhindern sie eine Kollision mit solchen beweglichen Elementen des 3D-Druckers 12. Indem solche Kollisionen verhindert werden, ist noch besser gewährleistet, dass ein auf dem beim 3D-Druck verwendeten Material 40 platziertes Tragschild 22 nicht unerwünscht verschoben wird.

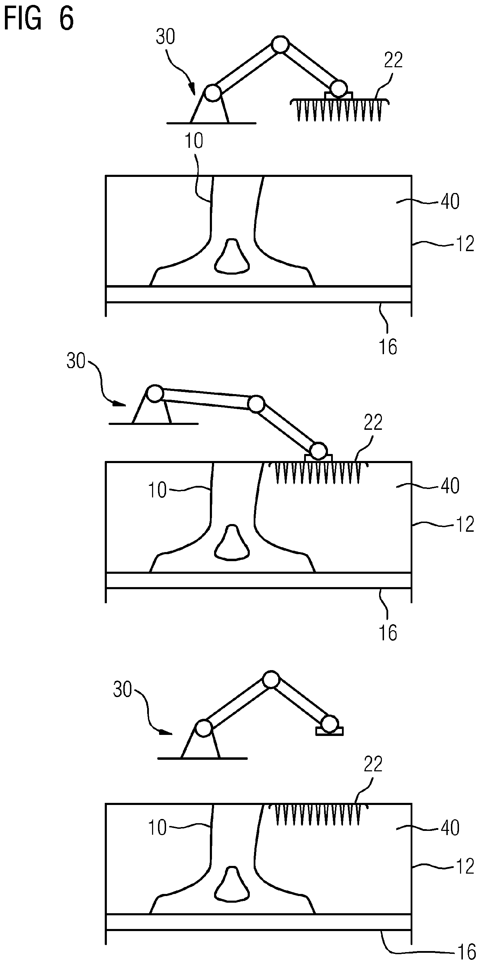

Die Darstellung in FIG 6 zeigt - von oben nach unten - zeitlich aufeinanderfolgende Momentaufnahmen während eines 3D-Drucks nach dem hier vorgeschlagenen Ansatz. Im oberen Bereich zeigt die Darstellung in FIG 6 einen Manipulator 30, der mittels eines entsprechenden Werkzeugs ein aufgenommenes Tragschild 22 hält. Im mittleren Bereich zeigt die Darstellung den Manipulator 30 beim Platzieren des Tragschilds 22, nämlich beim Platzieren des Tragschilds 22 im Bereich des 3D-Druckers 12 und auf der Oberfläche des bei 3D-Druck verwendeten Materials 40. Im unteren Bereich zeigt die Darstellung das mittels des Manipulators 30 auf dem beim 3D-Druck verwendeten Material 40 platzierte Tragschild 22. Der Manipulator 30 hat das Tragschild 22 dort abgelegt und ist wieder in eine Ausgangsposition oder dergleichen verfahren worden, insbesondere in eine Position, die eine Fortsetzung des 3D-Drucks erlaubt. Diese Verfahrensschritte - Aufnehmen eines Tragschilds 22 mittels des Manipulators 30; Platzieren und Ablegen des Tragschild 22 mittels des Manipulators 30 und Fortsetzen des 3D-Drucks bei zurückgezogenem Manipulator 30 - werden während des 3D-Drucks ausgeführt, wenn ein Tragschild 22 zum Herstellen einer Stützstruktur 20 und/oder zum Herstellen eines Abschnitts des jeweiligen Druckteils 10 benötigt wird.

Während bei dem in der Darstellung in FIG 6 gezeigten Verfahrensablauf der Manipulator 30 nur vergleichsweise kurzzeitig mit dem Tragschild 22 in Kontakt ist, nämlich nur vom Aufnehmen des Tragschilds 22 bis zu dessen Platzierung auf der Oberfläche des beim 3D-Druck verwendeten Materials 40, ist bei einer Situation, wie sie in der Darstellung in FIG 2 gezeigt ist, der Manipulator 30 länger mit dem Tragschild 22 in Kontakt. Dennoch werden auch dort im Rahmen des 3D-Drucks ähnliche Verfahrensschritte ausgeführt: Ein mittels des Manipulators 30 aufgenommenes oder mit dem Manipulator 30 verbundenes Tragschild 22 wird mittels des Manipulators 30 im Bereich des 3D-Druckers 12 platziert und nach dem Platzieren des Tragschilds 22 wird der 3D-Druck fortgesetzt.

Grundsätzlich kann dabei der Manipulator 30 das platzierte Tragschild 22 bis zum Abschluss des jeweiligen 3D-Drucks halten. Bei einer vorteilhaften Ausführungsform des Verfahrens zum 3D-Druck ist vorgesehen, dass der Manipulator 30 das platzierte Tragschild 22 so lange hält (Haltedauer), wie dies erforderlich ist. Die Haltedauer ist dabei diejenige Zeit, die verstreicht, bis sich im Zuge der Fortsetzung des 3D-Drucks das jeweils hergestellte Druckteil 10 selbst trägt und Verformungen oder dergleichen nicht mehr zu erwarten sind.

Zunächst ist noch für die in FIG 2 gezeigte Situation darauf hinzuweisen, dass bei einem entsprechenden Verfahren zum 3D-Druck die Option besteht, dass der Manipulator 30 das Tragschild 22 mittels eines Werkzeugs hält oder dass das Tragschild 22 mit dem Manipulator 30 verbunden und an dessen freiem Ende angebracht ist. Im ersten Fall kann der Manipulator 30 das Tragschild 22 am Ende einer Haltedauer loslassen und das Tragschild 22 kann auch nach dem Zurückziehen des Manipulators 30 im Bereich der 3D-Druckvorrichtung 12 verbleiben und weiterhin unterhalb der Stützstruktur 20 und/oder einen Teil des Druckteils 10 bleiben. Bei einer solchen Situation besteht auch die Möglichkeit, dass die Stützstruktur 20 mit dem Tragschild 22 verbunden wird. Im zweiten Fall nimmt der Manipulator 30 das Tragschild 22 am Ende der Haltedauer und beim Zurückziehen aus dem Bereich der 3D-Druckvorrichtung 12 (aus dem Druckbereich) mit.

Diese beiden möglichen Varianten sind im Folgenden mitzulesen, auch wenn bei der weiteren Beschreibung die Variante mit einem vom Manipulator 30 mittels eines Werkzeugs gehaltenen und nach Ablauf der Haltedauer losgelassenen und im Bereich der 3D-Druckvorrichtung 12 verbleibenden Tragschilds 22 im Vordergrund steht.

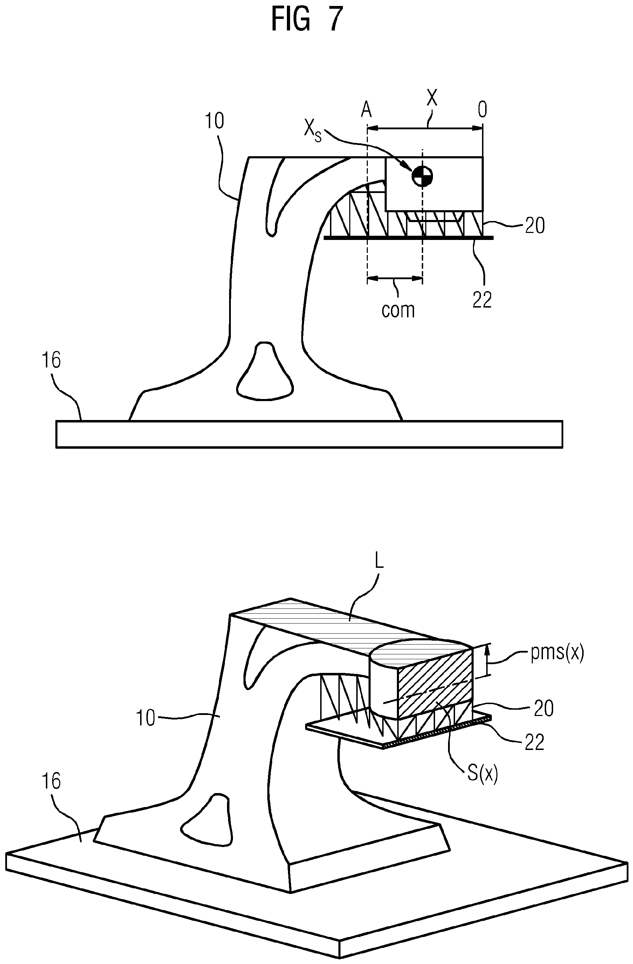

Die notwendige Haltedauer kann errechnet werden. In die Berechnung der Haltedauer fließen die folgenden Parameter ein, die in der Darstellung in FIG 7 so weit wie möglich auch gezeigt sind:

$x$: ist die Länge eines betrachteten auskragenden Abschnitts des Druckteils 10 entlang einer Raumkoordinate, hier der x-Achse, wobei die betrachtete Länge einen gedachten Ansatzpunkt A des auskragenden Abschnitts des Druckteils 10 an dem restlichen Druckteil 10 definiert.

$S(x)$: ist der Flächeninhalt einer Schnittfläche des auskragenden Abschnitts am Ort $x$.

$M$: ist die Masse des Tragschilds 22.

com: ist der Abstand des Massenmittelpunkts $x_S$ des auskragenden Abschnitts des Druckteils 10 sowie des Tragschilds 22 von dem o.g. gedachten Ansatzpunkt A und entlang derselben Raumkoordinate gemessen wie die betrachtete Länge.

$J_S(x)$: ist das Trägheitsmoment einer Schnittfläche des auskragenden Abschnitts des Druckteils 10 am Ort $x$.

pms($x$): ist in der Schnittfläche $S$ am Ort $x$ der Abstand eines Punktes maximaler Spannung von einer Nulllinie (neutrale Faser) der Schnittfläche $S$. Die neutrale Faser ist in der Festigkeitslehre bekanntlich in einem Balken diejenige Faser oder Schicht, deren Länge sich bei einer Verformung des Balkens nicht ändert. Bei dem Druckteil 10 ist die neutrale Faser diejenige Faser oder Schicht in dem auskragenden Abschnitt des Druckteils 10, deren in x-Richtung gemessene Länge sich bei einer Verformung des auskragenden Abschnitts nicht ändert.

$\sigma_{max}(x)$: ist die maximale Spannung, die auf eine Schnittfläche $S$ am Ort $x$ wirkt, nämlich aufgrund der Masse des von der Schnittfläche $S$ am Ort $x$ umfassten Materials 40 sowie der Masse $M$ des Tragschilds 22.

$\rho$: ist die Materialdichte des Druckteils 10.

$T(t,x,y)$: ist die Temperatur in einer im Rahmen des 3D-Drucks entstandenen Teilschicht $L$ und eine Funktion der Zeit t und des Orts x,y innerhalb der Teilschicht L.
Rp(T): ist die Streckgrenze des Materials 40 des Druckteils 10 und eine Funktion der Temperatur T.
g: ist die Gravitationskonstante.

Die Masse des Materials 40 des auskragenden Abschnitts des Druckteils 10 bis zum Ort x kann wie folgt berechnet werden:

$$\int_0$$

Die maximale Spannung, die auf eine Schnittfläche S des auskragenden Abschnitts des Druckteils 10 am Ort x aufgrund der Massen des auskragenden Abschnitts und des Tragschilds 22 ausgeübt wird, kann wie folgt berechnet werden:

$$\text{stress(x)} = \frac{[mass(x) + M] * g * com}{J_S(x)} * pms(x)$$

Die maximale Spannung (Spannungsmaximum) innerhalb des auskragenden Abschnitts des Druckteils 10 ist

$$stress_{max} = \max_x(stress(x))$$

Falls das Tragschild 22 mittels des Manipulators 30 am Ende der Haltedauer aus dem Druckbereich entfernt wird - entweder indem das Tragschild 22 weiterhin mittels eines entsprechenden Werkzeugs gehalten wird oder indem das Tragschild 22 mit dem Manipulator 30 verbunden ist - und entsprechend keinen Einfluss mehr auf den auskragenden Abschnitt des Druckteils 10 hat, gilt anstelle des oben Gesagten das Folgende:
Die maximale Spannung $\sigma_{max}(x)$ ergibt sich lediglich aufgrund der Masse des von der Schnittfläche S am Ort x umfassten Materials 40 und der Wert M ist gleich Null (M=0).

Zur Berechnung der notwendigen Haltedauer werden wiederholt die folgenden Verfahrensschritte ausgeführt. Die Berechnung beginnt nach dem Platzieren des Tragschilds 22 mittels des Manipulators 30, also nach dem Platzieren des Tragschilds 22 vor einem ersten Aufbringen von Material 40 auf die Oberfläche des Tragschilds 22. Die Berechnung wird wiederholt ausgeführt, nämlich jeweils nach dem Abscheiden einer neuen Materialschicht L.

1. Nach dem Abscheiden einer jeden neuen Materialschicht L wird das Spannungsmaximum $stress_{max}$ berechnet.
2. Die Temperatur T(t,x,y) innerhalb der zuletzt abgeschiedenen Materialschicht L wird für den aktuellen Zeitpunkt t berechnet (zum Beispiel durch Simulation) und für die Festigkeitsberechnung wird die höchste Temperatur $T_{max}$ innerhalb der zuletzt abgeschiedenen Materialschicht L herangezogen (da mit steigender Temperatur die Materialfestigkeit abnimmt, ist die Verwendung der maximalen Temperatur $T_{max}$ eine Sicherheitsmaßnahme).
3. $Rp(T_{max})$ des abgelagerten Materials wird aus bekannten Materialeigenschaften des beim jeweiligen 3D-Druck verwendeten Materials 40 extrapoliert.
4. Wenn das Spannungsmaximum $stress_{max}$ kleiner als $Rp(T_{max})$ ist, können sich der auskragende Abschnitt des Druckteils 10 und das davon umfasste abgeschiedene Material 40 ohne Verformung selbst halten und es ist keine Unterstützung durch das Tragschild 22 mehr erforderlich. Der Manipulator 30 muss das Tragschild 22 nicht mehr halten und der Manipulator 30 wird für eine andere Aufgabe, zum Beispiel das Platzieren und anschließende Halten eines anderen Tragschilds 22 an einem anderen Ort, frei.
5. Solange das Spannungsmaximum $stress_{max}$ größer oder gleich $Rp(T_{max})$ ist, kann sich der auskragende Abschnitt des Druckteils 10 nicht ohne Verformung halten und das Tragschild 22 muss mittels des Manipulators 30 weiter in Position gehalten werden.

Alle in die Berechnung der Haltedauer einfließenden Parameter, deren Bestimmung hier nicht ausdrücklich erläutert wurde, lassen sich in grundsätzlich an sich bekannter Art und Weise bestimmen, zum Beispiel mittels an sich bekannter CAD-Funktionen.

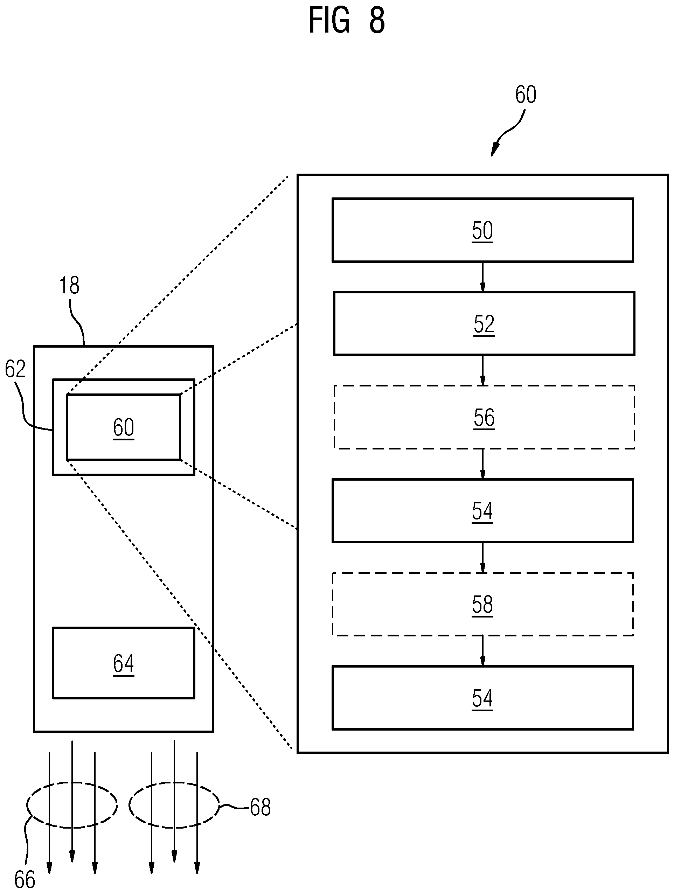

Die Darstellung in FIG 8 zeigt abschließend den Ablauf eines 3D-Drucks nach dem hier vorgeschlagenen Ansatz in Form eines schematisch vereinfachten Flussdiagramms. Zunächst beginnt der 3D-Druck in an sich bekannter Art und Weise (Block 50). Zu einem vom jeweils hergestellten Druckteil 10 abhängigen Zeitpunkt während des 3D-Drucks wird ein Tragschild 22 im Bereich des 3D-Druckers 12 platziert (Block 52), zum Beispiel mittels eines dafür bestimmten Manipulators 30. Anschließend wird der 3D-Druck in grundsätzlich an sich bekannter Art und Weise fortgesetzt (Block 54). Bevorzugt werden der Zeitpunkt der automatischen Platzierung und der Ort der automatischen Platzierung des Tragschilds 22 wie eingangs geschildert automatisch ermittelt, insbesondere zeitlich vor der Ausführung des 3D-Drucks.

Je nach Art des 3D-Druckverfahrens erfolgt im Anschluss an das Platzieren des Tragschilds 22 ein Zurückziehen des Manipulators 30 aus dem Bereich, in dem der 3D-Druck erfolgt (Block 56) oder es erfolgt nach Ablauf einer Haltedauer ein Zurückziehen des Manipulators 30 - mit oder ohne dem zuvor vom Manipulator 30 gehaltenen Tragschild 22 - aus dem Bereich, in dem der 3D-Druck erfolgt (Block 58). Die Haltedauer kann wie oben beschrieben errechnet werden oder die Haltedauer läuft bis zum Abschluss eines jeweiligen 3D-Drucks.

Das Zurückziehen des Manipulators 30 (ohne Entfernung des Tragschilds 22) gemäß Block 56 erfolgt bei einem 3D-Druckverfahren wie dies in den Darstellungen in FIG 3, FIG 4 und FIG 6 gezeigt ist. Das Zurückziehen des Manipulators 30 (mit oder ohne Entfernung des Tragschilds 22) gemäß Block 58 erfolgt bei einem 3D-Druckverfahren wie dies in den Darstellungen in FIG 2 und FIG 7 gezeigt ist. Wenn die Haltedauer vor dem Abschluss eines jeweiligen 3D-Drucks endet (errechnete Haltedauer) wird der 3D-Druck im Anschluss an das Zurückziehen des Manipulators 30 gemäß Block 58 fortgesetzt (zweiter Block 54).

Eine Implementation des in FIG 8 schematisch vereinfacht gezeigten Ablaufs in Software oder in Soft- und Firmware ist ein als Steuerungsprogramm 60 fungierendes Computerprogramm, das beim Betrieb des die 3D-Druckvorrichtung 12 und zumindest einen Manipulator 30 umfassenden Systems durch die Steuerungseinrichtung 18 zur Ausführung dies hier vorgeschlagenen Verfahrens zum 3D-Druck (des hier vorgeschlagenen additiven Herstellungsverfahrens) ausgeführt wird. Die Steuerungseinrichtung 18 steuert und überwacht also die 3D-Druckvorrichtung 12 und den mindestens einen Manipulator 30 und koordiniert deren Betrieb.

Das Steuerungsprogramm 60 wird in einen Speicher 62 der Steuerungseinrichtung 18 (s.a. FIG 1) geladen. Das Steuerungsprogramm 60 und die davon umfassten Computerprogrammanweisungen werden beim Betrieb des jeweiligen 3D-Druckers 12 mittels einer vor der Steuerungseinrichtung 18 umfassten Verarbeitungseinheit 64 in grundsätzlich an sich bekannter Art und Weise ausgeführt. Während der Ausführung des Steuerungsprogramms 60 und aufgrund der Ausführung des Steuerungsprogramms 60 erzeugt die Steuerungseinrichtung 18 Steuersignale 66 zur grundsätzlich an sich bekannten Steuerung des jeweiligen 3D-Druckers 12 sowie Steuersignale 68 zur Ansteuerung des oder eines Manipulators 30.

Die Steuersignale 68 zur Ansteuerung des oder eines Manipulators 30 umfassen Signale, welche bewirken, dass der oder der jeweilige Manipulator 30 zu einem zuvor automatisch bestimmten Zeitpunkt automatisch ein Tragschild 22 im Bereich des 3D-Druckers 12 platziert und dass diese automatische Platzierung an einem zuvor automatisch bestimmten Ort erfolgt. Die Steuersignale 68 umfassen zum Beispiel in grundsätzlich an sich bekannter Art und Weise eine für den jeweiligen Manipulator 30 interpretierbare Kodierung der Koordinaten des Orts, an dem das Tragschild 22 zu platzieren ist, und diese Signale werden zum Beispiel zu dem Zeitpunkt generiert, zu dem das Tragschild 22 zu platzieren ist. Die Steuersignale 68 selbst zusammen mit dem Zeitpunkt von deren Generierung bestimmen also bei einer entsprechenden Ausführungsform den Zeitpunkt und den Ort der automatischen Platzierung des Tragschilds 22.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein System, welches zumindest eine 3D-Druckvorrichtung 12 sowie zumindest ein zusammen mit der 3D-Druckvorrichtung 12 verwendbares Tragschild 22 umfasst, sowie ein Verfahren zum Betrieb eines solchen Systems. Die 3D-Druckvorrichtung 12 umfasst eine Grundplatte 16 oder der 3D-Druckvorrichtung 12 ist eine Grundplatte 16 räumlich und funktional zugeordnet. Das zumindest eine Tragschild 22 ist im Bereich der 3D-Druckvorrichtung 12 unabhängig von dessen Grundplatte 16 platzierbar und wird im Rahmen des Verfahrens platziert. Eine Oberfläche der Grundplatte 16 und eine Oberfläche des zumindest einen Tragschilds 22 fungieren als Basis für einen 3D-Druck. Auf der Oberfläche des zumindest einen Tragschilds 22 entsteht zum Beispiel eine Stützstruktur 20 für ein jeweiliges Druckteil 10. Die Stützstruktur 20 kann entsprechend deutlich kleiner ausfallen als eine ansonsten erforderliche, von der Grundplatte 16 ausgehende Stützstruktur 20.

**Patentansprüche**

1. System umfassend eine 3D-Druckvorrichtung (12) und zumindest ein zusammen mit der 3D-Druckvorrichtung (12) verwendbares Tragschild (22),
   wobei die 3D-Druckvorrichtung (12) eine Grundplatte (16) umfasst oder der 3D-Druckvorrichtung (12) eine Grundplatte (16) zugeordnet ist,
   wobei das zumindest eine Tragschild (22) im Bereich der 3D-Druckvorrichtung (12) unabhängig von dessen Grundplatte (16) separat platzierbar ist und

wobei eine Oberfläche der Grundplatte (16) und eine Oberfläche des zumindest einen Tragschilds (22) als Basis für einen 3D-Druck fungieren.

2.  System nach Anspruch 1, zusätzlich umfassend zumindest einen Manipulator (30), wobei das zumindest eine Tragschild (22) mittels zumindest eines Manipulators (30) unabhängig von der Grundplatte (16) im Bereich der 3D-Druckvorrichtung (12) platzierbar ist.

3.  System nach Anspruch 2, wobei das zumindest eine Tragschild (22) während eines 3D-Druckvorgangs mittels des oder eines Manipulators (30) zumindest zeitweise in Position gehalten wird.

4.  System nach Anspruch 2, wobei das zumindest eine Tragschild (22) während des 3D-Druckvorgangs mittels des oder eines Manipulators (30) auf einem beim 3D-Druck verwendeten Material (40) platzierbar ist.

5.  System nach Anspruch 4, wobei das zumindest eine Tragschild (22) an seiner Unterseite zumindest ein Positionierelement (24) aufweist.

6.  System nach Anspruch 4 oder 5, wobei das zumindest eine Tragschild (22) an zumindest zwei einander gegenüberliegenden Seiten (26) des Tragschilds (22) abgerundet oder gewölbt ist.

7.  Verfahren zum 3D-Druck unter Verwendung eines Systems nach einem der vorangehenden Ansprüche, mit folgenden Verfahrensschritten:

    Platzieren eines Tragschilds (22) im Bereich der 3D-Druckvorrichtung (12) und
    Verwenden der Oberfläche der Grundplatte (16) und der Oberfläche des jeweiligen Tragschilds (22) als Basis für einen 3D-Druck.

8.  Verfahren nach Anspruch 7, wobei das Tragschild (22) mittels zumindest eines Manipulators (30) unabhängig von der Grundplatte (16) im Bereich der 3D-Druckvorrichtung (12) platziert wird.

9.  Verfahren nach Anspruch 8, wobei ein für den 3D-Druck jeweils erforderliches Tragschild (22) automatisch und entsprechend einer jeweils erforderlichen Größe ausgewählt wird.

10. Verfahren nach Anspruch 8 oder 9, wobei das Tragschild (22) während des 3D-Drucks mittels des oder eines Manipulators (30) zu einem automatisch ermittelten Zeitpunkt an einem automatisch ermittelten Ort platziert wird.

11. Verfahren nach Anspruch 8, 9 oder 10, wobei das Tragschild (22) während des 3D-Drucks mittels des oder eines Manipulators (30) zumindest zeitweise in Position gehalten wird.

12. Verfahren nach Anspruch 11, wobei das Tragschild (22) während des 3D-Drucks mittels des oder eines Manipulators (30) während einer während des 3D-Drucks automatisch ermittelten Haltedauer in Position gehalten wird.

13. Verfahren nach Anspruch 8, 9 oder 10, wobei das Tragschild (22) während des 3D-Drucks mittels des oder eines Manipulators (30) auf einem beim 3D-Druck verwendeten Material (40) platziert wird.

14. Verfahren nach Anspruch 13 unter Verwendung eines Systems nach Anspruch 6, wobei das Tragschild (22) mit seinen abgerundeten oder gewölbten Seiten (26) quer oder zumindest im Wesentlichen quer zu einer Bewegungsrichtung einer Rakel oder Walze der 3D-Druckvorrichtung (12) ausgerichtet wird.

15. Steuerungsprogramm (60) mit Programmcodeanweisungen, um alle Schritte von jedem beliebigen der Ansprüche 8 bis 14 durchzuführen, wenn das Steuerungsprogramm (60) mittels einer Steuerungseinrichtung (18) für ein System nach einem der Ansprüche 1 bis 6 ausgeführt wird.

16. Steuerungseinrichtung (18) mit einem Speicher (62) und einer Verarbeitungseinheit (64) und zur Verwendung mit einem System nach einem der Ansprüche 1 bis 6,
wobei in den Speicher (62) ein Steuerungsprogramm (60) mit einer Implementation des Verfahrens nach einem der Ansprüche 8 bis 14 ladbar oder geladen ist,
wobei das Steuerungsprogramm (60) Programmcodeanweisungen umfasst, die bei einer Ausführung des Steuerungsprogramms (60) durch die Steuerungseinrichtung (18) und deren Verarbeitungseinheit (64) die Steuerungseinrichtung (18) veranlassen, den oder einen Manipulator (30) zur automatischen Platzierung des Tragschilds (22) im Bereich der 3D-Druckvorrichtung (12) anzusteuern.

# FIG 1

# FIG 2

## FIG 3

## FIG 4

# FIG 5

## FIG 6

# FIG 7

# FIG 8

**Europäisches Patentamt**

**European Patent Office**

**Office européen des brevets**

# EUROPÄISCHER RECHERCHENBERICHT

**Nummer der Anmeldung**

EP 20 18 8405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 225652 A1 (SIEMENS AG [DE]) 22. Juni 2017 (2017-06-22) <br><br> * Absätze [0044] - [0059], [0062] * <br> * Abbildungen 1-7 * <br> ----- | 1-3,6-8, 10-12, 14-16 | INV. B22F3/105 B33Y10/00 B33Y30/00 B22F3/00 B29C64/245 |
| X | DE 10 2013 214485 A1 (ROLLS ROYCE DEUTSCHLAND [DE]) 19. Februar 2015 (2015-02-19) <br> * Absätze [0022] - [0025] * <br> * Abbildung 3 * <br> ----- | 1-3,7-9, 11,15,16 | B29C64/379 B29C64/40 B29C64/118 B29C64/153 |
| X | EP 3 351 321 A1 (SIEMENS AG [DE]) 25. Juli 2018 (2018-07-25) <br> * Absätze [0027] - [0034]; Abbildungen 1, 2 * <br> ----- | 1-8,10, 11,13-16 | |

**RECHERCHIERTE SACHGEBIETE (IPC)**

B22F
B33Y
B29C

Der vorliegende Recherchenbericht wurde für alle Patentansprüche erstellt

| Recherchenort | Abschlußdatum der Recherche | Prüfer |
|---|---|---|
| Den Haag | 29. Dezember 2020 | Forestier, Gilles |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 8405

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-12-2020

| Im Recherchenbericht angeführtes Patentdokument | Datum der Veröffentlichung | Mitglied(er) der Patentfamilie | Datum der Veröffentlichung |
|---|---|---|---|
| DE 102015225652 A1 | 22-06-2017 | CN 108367350 A | 03-08-2018 |
| | | DE 102015225652 A1 | 22-06-2017 |
| | | EP 3349928 A1 | 25-07-2018 |
| | | JP 2018537594 A | 20-12-2018 |
| | | KR 20180094052 A | 22-08-2018 |
| | | US 2018326486 A1 | 15-11-2018 |
| | | WO 2017102286 A1 | 22-06-2017 |
| DE 102013214485 A1 | 19-02-2015 | KEINE | |
| EP 3351321 A1 | 25-07-2018 | CN 110234450 A | 13-09-2019 |
| | | EP 3351321 A1 | 25-07-2018 |
| | | EP 3538303 A1 | 18-09-2019 |
| | | US 2019381733 A1 | 19-12-2019 |
| | | WO 2018137876 A1 | 02-08-2018 |

EPO FORM P0461

Für nähere Einzelheiten zu diesem Anhang : siehe Amtsblatt des Europäischen Patentamts, Nr.12/82